Europäisches Patentamt

European Patent Office

Office européen des brevets

(19)

(11) Publication number: **0 167 232**
**B1**

(12) **EUROPEAN PATENT SPECIFICATION**

(45) Date of publication of patent specification: **11.01.89**   (51) Int. Cl.[4]: **C 01 B 33/28**

(21) Application number: **85303063.3**

(22) Date of filing: **30.04.85**

(54) **Preparation of zeolite ZSM-12.**

(30) Priority: **26.06.84 US 624562**

(43) Date of publication of application:
**08.01.86 Bulletin 86/02**

(45) Publication of the grant of the patent:
**11.01.89 Bulletin 89/02**

(84) Designated Contracting States:
**BE DE FR GB IT NL SE**

(56) References cited:
**EP-A-0 002 079**
**US-A-3 699 139**
**US-A-3 832 449**
**US-A-4 391 785**

(73) Proprietor: **MOBIL OIL CORPORATION**
**150 East 42nd Street**
**New York New York 10017 (US)**

(72) Inventor: **Rubin, Mae Koenig**
**50 Belmont Avenue**
**Bala Cynwyd, Pa. 19004 (US)**

(74) Representative: **Carpmael, John William
Maurice et al
CARPMAELS & RANSFORD 43 Bloomsbury
Square
London, WC1A 2RA (GB)**

EP 0 167 232 B1

Courier Press, Leamington Spa, England.

# EP 0 167 232 B1

**Description**

This invention relates to a new and improved form of zeolite ZSM-12, to a new and useful improvement in synthesizing this crystalline silicate, and to its use as a catalyst for organic compound, e.g. hydrocarbon compound, conversion.

Crystalline silicate ZSM-12, which is identified by its x-ray diffraction pattern, and its conventional preparation are disclosed in US—A—3,832,449.

US—A—4,391,785 discloses synthesis of zeolite ZSM-12 from a reaction mixture comprising dimethyl pyridinium halide or dimethyl pyrrolidinium halide. US—A—4,296,083 claims synthesizing zeolites of constraint index of 1 to 12 and an alumina/silica mole ratio of not greater than 0.083 from a reaction mixture containing an organic nitrogen-containing cation provided by triethylamine, trimethylamine, tripropylamine, ethylenediamine, propanediamine, butanediamine, pentanediamine, hexanediamine, methylamine, ethylamine, propylamine, butylamine, dimethylamine, diethylamine, dipropylamine, benzylamine, aniline, pyridine, piperidine and pyrrolidine.

US—A—4,151,189 discloses synthesizing zeolites ZSM-5, ZSM-12, ZSM-35 and ZSM-38 from a reaction mixture containing a primary amine having 2 to 9 carbon atoms, US—A—4,112,056 discloses synthesis of ZSM-12 from a reaction mixture containing tetraethylammonium ions.

An improved reproducible method for preparing an improved crystalline silicate identified as zeolite ZSM-12 over an unusually wide range of aluminum content exhibiting high purity, high crystallinity, catalytic activity and other valuable properties has now been discovered. The method comprises forming a reaction mixture containing sources of alkali metal oxide, an organic nitrogen-containing cation, an oxide of silicon, water and, optionally an oxide of aluminum and having a composition, in terms of mole ratios, within the following ranges:

|  | Broad | Preferred |
|---|---|---|
| $SiO_2/Al_2O_3$ | 100—∞ | 200—2800 |
| $H_2O/OH^-$ | 80—400 | 100—250 |
| $OH^-/SiO_2$ | 0.03—0.4 | 0.04—0.2 |
| R/(R+M) | 0.2—1.0 | 0.3—0.7 |

wherein R is a cation derived from a dibenzyldimethylammonium compound and M is an alkali metal ion, and maintaining the mixture until crystals of the crystalline silicate ZSM-12 are formed. By this method, ZSM-12 is synthesized from a reaction mixture with a $SiO_2/Al_2O_3$ molar ratio up to "infinity" or very close thereto. The quantity of $OH^-$ is calculated only from the inorganic sources of alkali without any organic base contribution.

Thereafter, the crystals are separated from the liquid and recovered. Reaction conditions required consist of heating the foregoing reaction mixture to a temperature of from about 80°C to about 180°C for a period of time of from about 6 hours to about 200 days. A more preferred temperature range is from about 100°C to about 160°C with the amount of time at a temperature in such range being from about 48 hours to about 50 days. The digestion of the gel particules is carried out until crystals form. The solid product is separated from the reaction medium, as by cooling the whole to room temperature, filtering and water washing.

Zeolite ZSM-12 synthesized under conventional procedure is proven to have catalytic application. When the crystalline silicate is synthesized in accordance with the present method, it exhibits high purity and high crystallinity with no contamination from other silicates, e.g. ZSM-5, and significantly enhanced catalytic activity for certain conversion of interest, including cracking and hydrocracking. The ZSM-12 synthesized hereby has a wider silica/alumina molar ratio range than conventionally prepared ZSM-12, allowing for tailoring that ratio to suit specific purposes. The present method proves to be reproducible and easy to carry out.

The particular effectiveness of the presently required dibenzyldimethylammonium compound (which may be a hydroxide and/or halide such as chloride, bromide or iodide), when compared with other directing agents is believed due to its ability to function as a template in the nucleation and growth of zeolite ZSM-12 crystals. This different organic directing agent functions in this fashion over an unusually wide range of reaction mixture aluminum content, and provides a crystalline ZSM-12 product free from contamination with other silicates, such as ZSM-5.

A further economy is realized by the present method when the directing agent is derived *in situ* from combination of dimethylbenzylamine and benzyl halide in the reaction mixture. The reaction product of these two reagents is the dibenzyldimethylammonium compound (halide, e.g. chloride) directing agent required by the present invention. Sufficient dimethylbenzylamine and benzyl halide must be added to the reaction mixture to provide the required R/(R+M).

The reaction mixture composition can be prepared from materials which supply the appropriate oxide. Such compositions include aluminates, alumina, silicates, silica hydrosol, silica gel, silicic acid and hydroxides. Each oxide component utilized in the reaction mixture for preparing the zeolite can be supplied by one or more essential reactants and they can be mixed together in any order. For example, any oxide can be supplied by an aqueous solution, sodium hydroxide or by an aqueous solution of a suitable silicate;

the organic cation can be supplied by the directing agent compound of that cation, such as, for example, the hydroxide or a salt, e.g. halide, such as chloride, bromide or iodide. The reaction mixture can be prepared either batchwise or continuously. In general, the crystal morphology of the ZSM-12 synthesized hereby is 1 to 2 micron layered spheres.

Zeolite ZSM-12 freshly synthesized in accordance with the invention will usually conform with the formula in terms of mole ratios of oxides and in the anhydrous state:

$$(0.5 \text{ to } 3.0)R_2O:(0.1 \text{ to } 1.0)M_{2/n}O:(0.02 \text{ to } 1.0)Al_2O_3:(100)SiO_2$$

wherein M is at least one cation having a valence n, R is the cation derived from the dibenzyldimethylammonium compound.

The original cations, e.g. alkali metal, can be replaced, at least in part, by calcination and/or ion exchange with another cation. Thus, the original alkali metal cations are exchanged into a hydrogen or hydrogen ion precursor form or a form in which the original cation has been replaced by a metal of Groups IIA, IIIA, IVA, IB, IIB, IIIB, IVB, VIB or VIII of the Periodic Table. Thus, for example, it is contemplated to exchange the original cations with ammonium ions or with hydronium ions. Catalytically active forms of these would include, in particular, hydrogen, rare earth metals, aluminum, metals of Groups II and VIII of the Periodic Table and manganese.

The x-ray diffraction pattern by which ZSM-12 is identified has the characteristic lines shown in Table 1.

TABLE 1

| Interplanar d-Spacing (A) | Relative intensity $(I/I_o)$ |
|---|---|
| 11.9 ±0.2 | M |
| 10.1 ±0.2 | M |
| 4.76±0.1 | W |
| 4.29±0.08 | VS |
| 3.98±0.08 | M |
| 3.87±0.07 | VS |
| 3.49±0.07 | W |
| 3.38±0.07 | M |
| 3.20±0.06 | W |
| 3.05±0.05 | W |
| 2.54±0.03 | W |

These values were determined by standard technique. The radiation was the K-alpha doublet of copper, and a diffraction equipped with a scintillation counter and a strip chart pen recorder was used. The peak heights, I, and the positions as a function of two times theta, where theta is the Bragg angle, were read from the spectrometer chart. From these, the relative intensities, 100 $I/I_o$ where $I_o$ is the intensity of the strongest line or peak, and d (obs.) the interplanar spacing in Angstrom units (A) corresponding to the recorded lines, were calculated. In Table 1 the relative intensities are given in terms of the symbols W=weak, M=medium, S=strong and VS=very strong. Ion exchanged forms of the zeolite manifest substantially the same pattern with some minor shifts in interplanar spacing and variation in relative intensity. Other minor variations can occur depending on the silicon to aluminum ratio of the particular sample and its thermal history.

While the crystalline silicate of the present invention may be used in a wide variety of organic compound, e.g. hydrocarbon compound, conversion reactions, it is notably useful in the processes of catalytic cracking and, when combined with a hydrogenation component, hydrocracking. Other conversion processes for which the zeolite may be utilized in one or more of its active forms include, for example, olefin or aromatic isomerization.

Zeolite ZSM-12 prepared in accordance herewith can be used either in the organic nitrogen-containing and alkali metal containing form, the alkali metal form and hydrogen form or another univalent or multivalent cationic form. It can also be used in intimate combination with a hydrogenating component such as tungsten, vanadium, molybdenum, rhenium, nickel, cobalt, chromium, manganese, or a noble metal such as platinum or palladium where a hydrogenation-dehydrogenation function is to be performed. Such components can be exhanged into the composition, impregnated therein or physically intimately admixed therewith, for example by, in the case of platinum, treating the zeolite with a platinum metal-containing ion. Suitable platinum compounds for this purpose include chloroplatinic acid, platinuous chloride and various compounds containing the platinum amine complex. Combinations of metals and methods for their introduction can also be used.

Zeolite ZSM-12, when employed either as an adsorbent or as a catalyst, should be dehydrated at least partially, suitably by heating to a temperature in the range of from about 200°C to about 600°C in an inert atmosphere, such as air, nitrogen, etc. and at atmospheric or subatmospheric pressures for between 1 and

3

48 hours. Dehydration can also be performed at lower temperature merely by placing the zeolite in a vacuum, but a longer time is required to obtain a particular degree of dehydration. The organic cations of freshly synthesized ZSM-12 can be decomposed by heating to a temperature up to about 600°C for from 1 hour to about 48 hours.

As above mentioned, zeolite ZSM-12 prepared in accordance herewith can have the original cations associated therewith replaced by a wide variety of other cations according to techniques well known in the art. Typical replacing cations include hydrogen, ammonium and metal cations including mixtures thereof. Of the replacing metallic cations, particular preference is given to cations of metals such as rare earths, Mn, Ca, Mg, Zn, Cd, Pd, Ni, Cu, Ti, Al, Sn, Fe and Co.

Typical ion exchange technique would be to contact the synthetic zeolite with a salt of the desired replacing cation or cations. Although a wide variety of salts can be employed, particular preference is given to chlorides, nitrates and sulfates.

Catalysts comprising zeolite ZSM-12 prepared according to the invention may be formed in a wide variety of particle sizes. Generally speaking, the particles can be in the form of a powder, a granule, or a molded product, such as extrudate having particle size sufficient to pass through a 2 mesh (Tyler) screen and be retained on a 400 mesh (Tyler) screen. In cases where the catalyst is molded, such as by extrusion, the crystalline silicate can be extruded before drying or dried or partially dried and then extruded.

In the case of many catalysts it is desirable to composite a zeolite with another material resistant to the temperatures and other conditions employed in certain organic conversion processes. Such matrix materials include active and inactive materials and synthetic or naturally occurring zeolites as well as inorganic materials such as clays, silica and/or metal oxides, e.g. alumina and are described in our EP—A—1695.

In general, organic compounds such as, for example, those selected from the group consisting of hydrocarbons, alcohols and ethers, are converted to products such as, for example, aromatics and lower molecular weight hydrocarbons, over the catalytically active form of the composition of this invention by contact under organic compound conversion conditions including a temperature of from about 100°C to about 800°C, a pressure of from about 0.1 atmosphere (bar) to about 200 atmospheres (202.8 bar), a weight hourly space velocity of from about 0.08 $hr^{-1}$ to about 2000 $hr^{-1}$ and a hydrogen/feedstock organic compound mole ratio of from 0 (no added hydrogen) to about 100.

Such conversion processes include, as non-limiting examples, cracking hydrocarbons to lower molecular weight hydrocarbons with reaction conditions including a temperature of from about 300°C to about 800°C, a pressure of from about 0.1 atmosphere (bar) to about 35 atmospheres (35.5 bar) and a weight hourly space velocity of from about 0.1 to about 20; dehydrogenating hydrocarbon compounds with reaction conditions including a temperature of from about 300°C to about 700°C, a pressure of from about 0.1 atmosphere (bar) to about 10 atmospheres (10.14 bar) and a weight hourly space velocity of from about 0.1 to about 20; converting paraffins to aromatics with reaction conditions including a temperature of from about 100°C to about 700°C, a pressure of from about 0.1 atmosphere (bar) to about 60 atmospheres (60.83 bar), a weight hourly space velocity of from about 0.5 to about 400 and a hydrogen/hydrocarbon mole ratio of from about 0 to about 20; converting olefins to aromatics, e.g. benzene, toluene and xylenes, with reaction conditions including a temperature of from about 100°C to about 700°C, a pressure of from about 0.1 atmosphere (bar) to about 60 atmospheres (60.83 bar), a weight hourly space velocity of from about 0.5 to about 400 and a hydrogen/hydrocarbon mole ratio of from about 0 to about 20; converting alcohols, e.g. methanol, or ethers, e.g. dimethylether, or mixtures thereof to hydrocarbons including aromatics with reaction conditions including a temperature of from about 275°C to about 600°C, a pressure of from about 0.5 atmosphere (bar) to about 50 atmospheres (50.69 bar) and a liquid hourly space velocity of from about 0.5 to about 100; isomerizing xylene feedstock components to product enriched in p-xylene with reaction conditions including a temperature from about 230°C to about 510°C, a pressure of from about 3 atmospheres (bar) to about 35 atmospheres (35.5 bar), a weight hourly space velocity of from about 0.1 to about 200 and a hydrogen/hydrocarbon mole ratio of from about 0 to about 100; disproportionating toluene to product comprising benzene and xylenes with reaction conditions including a temperature of from about 200°C to about 760°C, a pressure of from about atmospheric (1 bar) to about 60 atmospheres (60.83 bar) and a weight hourly space velocity of from about 0.08 to about 20; alkylating aromatic hydrocarbons, e.g. benzene and alkylbenzenes, in the presence of an alkylating agent, e.g. olefins, formaldehyde, alkyl halides and alcohols, with reaction conditions including a temperature of from about 340°C to about 500°C, a pressure of from about atmospheric (1 bar) to about 200 atmospheres (202.8 bar), a weight hourly space velocity of from about 2 to about 2000 and an aromatic hydrocarbon/alkylating agent mole ratio of from about 1/1 to about 20/1; and transalkylating aromatic hydrocarbons in the presence of polyalkylaromatic hydrocarbons with reaction conditions including a temperature of from about 340°C to about 500°C, a pressure of from about atmospheric (1 bar) to about 200 atmospheres (202.8 bar), a weight hourly space velocity of from about 10 to about 1000 and an aromatic hydrocarbon/polyalkylaromatic hydrocarbon mole ratio of from about 1/1 to about 16/1.

The following examples illustrate the invention. In the examples, whenever adsorption data are set forth for comparison of sorptive capacities for water, cyclohexane and n-hexane, they were determined as follows:

A weighed sample of the calcined adsorbent was contacted with the desired pure adsorbate vapor in an adsorption chamber, evacuated to 1 mm and contacted with 12 mm Hg of water vapor or 20 mm Hg of n-hexane, or cyclohexane vapor, pressures less than the vapor-liquid equilibrium pressure of the respective adsorbate at room temperature. The pressure was kept constant (within about ±0.5 mm) by addition of adsorbate vapor controlled by a monostat during the adsorption period, which did not exceed about 8 hours. As adsorbate was adsorbed by the sorbant material, the decrease in pressure caused the monostat to open a valve which admitted more adsorbate vapor to the chamber to restore the above control pressures. Sorption was complete when the pressure change was not sufficient to activate the monostat. The increase in weight was calculated as the adsorption capacity of the sample in g/100 g of calcined adsorbant.

Example 1

Sixteen grams of dibenzyldimethylammonium chloride was added to a solution containing 3.5 grams NaOH and 40.0 grams $H_2O$. The mixture was added to 190.0 grams colloidal silica (30% solution). The total was then thoroughly mixed. The mixture, which had the composition in mole ratios:

$$SiO_2/Al_2O_3 \quad = \quad \infty$$
$$H_2O/OH^- \quad = \quad 110$$
$$OH^-/SiO_2 \quad = \quad 0.092$$
$$R/(R+M) \quad = \quad 0.39$$

was then allowed to crystallize in a polypropylene jar under static conditions at 100°C for 50 days. The product crystals were separated from the remaining mixture, filtered, washed with water and dried at 120°C.

Chemical analysis showed the composition of the product to be:

| | |
|---|---|
| 0.99 wt.% | N |
| 0.40 wt.% | Na |
| 760 ppm | $Al_2O_3$ |
| 84.8 wt.% | $SiO_2$ |
| 88.8 wt.% | Ash |
| 1897 | $SiO_2/Al_2O_3$ molar ratio |

The dried product gave the x-ray diffraction pattern of 80% crystalline ZSM-12 compared with a reference ZSM-12 material.

A quantity of the product was calcined at 550°C for 16 hours in air, and then tested for sorption properties. The results were:

3.9 wt.% cyclohexane sorbed,
3.5 wt.% n-hexane sorbed, and
2.6 wt.% water sorbed.

Example 2

Two solutions were prepared:
(A) 1.53 grams NaOH in 49.0 grams $H_2O$; and
(B) 20.4 grams dibenzyldimethylammonium in 30 grams $H_2O$.

Solutions A and B were then mixed together, and the mixture was added to 165 grams of colloidal silica (30% solution). The total was then thoroughly mixed. The mixture, which had the composition in mole ratios:

$$SiO_2/Al_2O_3 \quad = \quad \infty$$
$$H_2O/OH^- \quad = \quad 238$$
$$OH^-/SiO_2 \quad = \quad 0.046$$
$$R/(R+M) \quad = \quad 0.66$$

was then allowed to crystallize in a polypropylene jar under static conditions at 150°C for 7 days. The product crystals were separated from the remaining mixture, filtered, washed with water and dried at 120°C.

Chemical analysis showed the composition of the product to be:

| | |
|---|---|
| 0.59 wt.% | N |
| 0.16 wt.% | Na |
| 571 ppm | $Al_2O_3$ |
| 92.1 wt.% | $SiO_2$ |
| 91.2 wt.% | Ash |
| 2746 | $SiO_2/Al_2O_3$ molar ratio |

The x-ray results indicated a 90% crystalline ZSM-12 structure compared with the reference ZSM-12 material.

A quantity of the product was calcined at 550°C for 16 hours in air, and then tested for sorption properties. The results were:

7.8 wt.% cyclohexane sorbed,
6.3 wt.% n-hexane sorbed, and
1.5 wt.% water sorbed.

Example 3

Dimethylbenzylamine, 6.8 grams, was added to 6.4 grams of benzylchloride. This mixture was added to a solution containing 1.2 grams NaOH in 85.0 grams $H_2O$. The combined solutions were added to 30.0 grams of colloidal silica (30%) and thoroughly mixed. The mixture was heated at 160°C for 39 days. The product exhibited the x-ray diffraction pattern of ZSM-12 (95% crystallinity compared with the reference ZSM-12 standard).

After calcination for 16 hours at 550°C, the product manifested the following sorption properties:

5.2 wt.% cyclohexane sorbed,
7.0 wt.% n-hexane sorbed, and
3.5 wt.% water sorbed.

Its chemical composition was:

| | |
|---|---|
| 78.1 wt.% | $SiO_2$ |
| 0.40 wt.% | $Al_2O_3$ |
| 0.19 wt.% | Na |
| 1.00 wt.% | N |
| 80.41 wt.% | Ash |
| 332 | $SiO_2/Al_2O_3$ molar ratio |

**Claims**

1. A method for synthesizing zeolite ZSM-12 which comprises preparing a mixture containing sources of alkali metal (M) oxide, a dibenzyldimethylammonium (R) compound, and oxide of aluminum, an oxide of silicon and water and having a composition, in terms of mole ratios, within the following ranges:

| | | |
|---|---|---|
| $SiO_2/Al_2O_3$ | = | 100—∞ |
| $H_2O/OH^-$ | = | 80—400 |
| $OH^-/SiO_2$ | = | 0.03—0.4 |
| $R/(R+M)$ | = | 0.2—1.0 |

and maintaining the mixture at a temperature of 80°C to 180°C until crystals of the zeolite are formed.

2. The method of claim 1 wherein said mixture has a composition, in terms of mole ratios:

| | |
|---|---|
| $SiO_2/Al_2O_3$ | 200—2800 |
| $H_2O/OH^-$ | 100—250 |
| $OH^-/SiO_2$ | 0.04—0.2 |
| $R/(R+M)$ | 0.3—0.7 |

3. The method of claim 1 or claim 2 wherein said dibenzyldimethylammonium compound is a halide and/or hydroxide.

4. The method of any preceding claim wherein said dibenzyldimethylammonium compound is produced in the reaction mixture from reaction of dimethylbenzylamine and benzyl halide.

5. The method of claim 3 or claim 4 wherein said halide is chloride.

**Patentansprüche**

1. Verfahren zur Synthese von Zeolith ZSM-12, welches die Herstellung einer Mischung, die Quellen eines Alkalimetall(M)oxids, einer Dibenzyldimethylammonium(R) verbindung und eines Aluminiumoxids, Siliciumoxid und Wasser enthält und, bezogen auf die Molverhältnisse, eine Zusammensetzung innerhalb der folgenden Bereiche aufweist:

| | | |
|---|---|---|
| $SiO_2/Al_2O_3$ | = | 100—∞ |
| $H_2O/OH^-$ | = | 80—400 |
| $OH^-/SiO_2$ | = | 0,03—0,4 |
| $R/(R+M)$ | = | 0,2—1,0 |

und das Halten dieser Mischung bei einer Temperatur von 80°C bis 180°C umfaßt, bis Kristalle dieses Zeoliths gebildet sind.

2. Verfahren nach Anspruch 1, worin die Mischung eine auf die Molverhältnisse bezogene Zusammensetzung aufweist:

$$\begin{array}{lll} SiO_2/Al_2O_3 & = & 200\text{---}2800 \\ H_2O/OH^- & = & 100\text{---}250 \\ OH^-/SiO_2 & = & 0,04\text{---}0,2 \\ R/(R+M) & = & 0,3\text{---}0,7. \end{array}$$

3. Verfahren nach Anspruch 1 oder Anspruch 2, worin die Dibenzyldimethylammoniumverbindung ein Halogenid und/oder ein Hydroxid ist.

4. Verfahren nach einem der vorstehenden Ansprüche, worin die Dibenzyldimethylammoniumverbindung in dieser Reaktionsmischung aus der Reaktion von Dimethylbenzylamin und Benzylhalogenid hergestellt wird.

5. Verfahren nach Anspruch 3 oder Anspruch 4, worin das Halogenid Chlorid ist.

## Revendications

1. Un procédé de synthèse d'une zéolite ZSM-12 qui consiste à préparer un mélange contenant des sources d'oxyde de métal alcalin (M), un dérivé de dibenzyldiméthylammonium (R), un oxyde d'aluminium, un oxyde de silicium et de l'eau et présentant une composition, en termes de rapport molaires, entrant dans les limites suivantes:

$$\begin{array}{ll} SiO_2/Al_2O_3 & 100\text{---}\infty \\ H_2O/OH^- & 80\text{---}400 \\ OH^-/SiO_2 & 0,03\text{---}0,4 \\ R/(R+M) & 0,2\text{---}1,0 \end{array}$$

et à maintenir ce mélange à une température de 80 à 180°C jusqu'à ce que se forment des cristaux de la zéolite.

2. Le procédé selon la revendication 1, dans lequel ce mélange présente une composition, en termes de rapport molaire:

$$\begin{array}{ll} SiO_2/Al_2O_3 & 200\text{---}2800 \\ H_2O/OH^- & 100\text{---}250 \\ OH^-/SiO_2 & 0,04\text{---}0,2 \\ R/(R+Na) & 0,3\text{---}0,7 \end{array}$$

3. Le procédé selon la revendication 1 ou 2, dans lequel ce dérivé de dibenzyldiméthylammonium est un halogénure et/ou un hydroxyde.

4. Le procédé selon l'une quelconque des revendications précédentes, dans lequel ce dérivé de dibenzyldiméthylammonium est préparé dans le mélange réactionnel par réaction de diméthyl-benzylamine et d'halogénure de benzyle.

5. Le procédé selon la revendication 3 ou la revendication 4, dans lequel cet halogénure est le chlorure.